# EUROPEAN PATENT SPECIFICATION

(11) **EP 0 688 694 B1**
(45) Date of publication and mention of the grant of the patent: **27.10.1999**
(21) Application number: 95201708.5
(22) Date of filing: 23.06.1995
(51) Int. Cl.: B60M 1/02, H01R 4/64, H01R 11/14

(54) **Device for galvanically connecting galvanic conductors, such as the rails of a railway, as well as a discharge assembly for connecting to a further galvanic conductor, such as a catenary wire, which extends some distance away above the ground**
Anordnung zum galvanischen Verbinden von galvanischen Leitern, wie Gleisen einer Eisenbahn, sowie eine Entladevorrichtung zum Verbinden eines weitereren galvanischen Leiters,wie eine Fahrleitung,die sich mit Abstand zum Boden erstreckt
Dispositif de connexion galvanique de conducteurs galvaniques, comme rails d'un chemin de fer, ainsi qu'un ensemble de décharge pour connexion à un autre conducteur galvanique, comme un fil caténaire, qui s'étend à distance du sol

(30) Priority: 22.11.1994 NL 9401947; 23.06.1994 NL 9401040
(43) Date of publication of application: 27.12.1995
(73) Proprietor: N.V. Nederlandse Spoorwegen, 3500 HA Utrecht (NL); RAILBOUW B.V., NL-4143 HL Leerdam (NL)
(72) Inventor: Boekhoven, Leonard Rudolf, NL-4143 CW Leerdam (NL); Hirdes, André Arien, NL-4003 HD Tiel (NL); Rijnaard, Arie Jan, NL-3314 KL Dordrecht (NL); Van Hemert, Hermanus Johannes, NL-3435 RP Nieuwegein (NL)
(74) Representative: de Bruijn, Leendert C.

(56) References cited:
- AT-A- 344 787
- BE-A- 729 343
- FR-A- 2 228 309

## Description

The present invention relates to the field of making temporary galvanic connections between galvanic conductors for, in particular, high-voltage current applications see for example AT-PS-344787. In particular, but not exclusively, the invention relates to the field of energy and signalling facilities for electric trains and similar vehicles.

In the event of calamities in the vicinity of a railway it is important, in connection with carrying out rescue work and the like in safety, that there is protection against electrocution. It is customary that, to this end, the conductor, frequently the catenary, is isolated over a wide area. Said isolation is carried out from a central post, which can be located a long distance away from the area of the catenary to be isolated. Partly as a result of this, a potential risk remains despite the isolation of a catenary or similar conductor. On the one hand, this risk can arise as a result of incorrect operation of the switching equipment in the remote switching post, or of any other source of failure which results in the relevant area of the catenary remaining under voltage. On the other hand, there can be residual voltages in the isolated catenary and/or induction voltages from sources in the vicinity, for example high voltage cables for supplying electrical energy from power stations to households, etc. It is therefore customary to earth an isolated catenary with the aid of a separate facility. Earthing of an isolated catenary also removes psychological burdens. In addition, it is relatively easy in this way to comply with legal regulations relating to work in the vicinity of high-voltage conductors.

With regard to galvanic conductors for railways and the like, the conductor, such as the catenary, is earthed, for example in the event of calamities, by making a galvanic connection between said catenary and one or both rails. A long, flexible galvanic wire is clamped onto the traction return line (one of the rails) and galvanically connected thereto. At its other end, the flexible wire bears a metal bracket with resilient clamping, frequently made of copper but optionally also of iron. The bracket is fixed on a long pole. In this way the operator, standing on the ground, is able to hang the bracket over the lateral suspension arm of the catenary, which is usually located 5.5 metres or more above the ground. This conventional method has the disadvantage that specially qualified persons ore required. Until they have arrived at the location of the calamity, there is a risk involved in rescue work in the vicinity of the catenary. In certain cases this implies a delay of half an hour, calculated from the initial calamity report. In connection with this it is also customary to clamp a one-piece steel bar or lance between the two parallel rails, by which means an indication of occupied track is obtained. The galvanic connection between the two rails by means of the one-piece iron or steel bar or lance is not adequately ensured under all circumstances. For example, said lance can be bent, so that the contact with the rails is insufficiently intimate. Said lance can also inadvertently become detached from the rails. The earthing of the catenary also presents problems. Firstly, it is necessary to establish which of the rails is the traction return line. Errors can be made here. Secondly, the flexible wire can be inadequately clamped on the traction return line and may become detached. There is also insufficient guarantee that the flexible wire is always first galvanically connected to the traction return line, after which the bracket is hung over the lateral suspension arm of the catenary. Furthermore, with the current equipment a particularly hazardous situation can arise if the catenary has apparently not been isolated in the area concerned and the bracket is engaged on the catenary itself. In such a situation there is a risk of the catenary melting through with not only a risk of electrocution, but also a risk of wounds in connection with droplets of molten metal spattering around. There is also a risk that parts of the short-circuiting equipment will be thrown around.

The aim of the present invention is to provide short-circuit equipment with which all or some of the abovementioned disadvantages can be overcome.

On the one hand, the invention aims to provide an improvement for making a galvanic connection between the rails. On the other hand, the invention aims to guarantee that the galvanic connection between the flexible wire and at least one of the two rails is always made first, after which the galvanic connection between the flexible wire and the catenary is made. By connecting the flexible wire to both rails, it is no longer necessary first to trace which of the rails is the return leg. A further aim of the invention is to achieve a change in the implement for achieving the connection to the catenary. A further aim of the invention is to provide short-circuiting or earthing equipment which can be used by less highly qualified personnel while maintaining and guaranteeing the requirements with regard to safe working practices. It is likewise an aim of the invention to provide short-circuiting equipment which is easier to handle. A further aim of the invention is an optimum structure for the short-circuiting facilities from the standpoint of optimum use of material, production costs and handling. A further aim of the invention is to provide occupied track indication.

The invention proposes to have a pawl mechanism, a locking mechanism and a sensor element to monitor proper positioning of the locking means w.r.t. the second conductor to guarantee porper locking of the locking means to the second conductor.

The invention proposes that the elements (in particular the bracket element) for galvanic connection of the catenary to one of the rails be connected in a detachable manner to the elements for galvanic connection of the two rails to one another (in particular the lance element) in such a way that said two types of element can be separated from one another only when a reliable galvanic connection has been produced between the two rails. This situation is preferably achieved by establishing by mechanical means that the galvanic connecting element (fitting of the lance element) for the rails has been brought into its folded-out/extended position, which position can be obtained only when that end of said galvanic connecting element which can be resiliently pushed in has been pushed in over a certain distance. In practice, it will be possible to achieve said pushing-in of said end only when the two ends of said galvanic connecting element simultaneously each engage with the rail on the respective side. Consequently, it is no longer a requirement first to select which of the rails is the traction return line. By means of the present invention it is possible reliably to programme the sequence of the various operations to be carried out so that even less well qualified staff are able to work safely. That is to say, with the present invention, in a preferred embodiment, the bracket element for connection to the catenary becomes available to the operators only when a reliable galvanically conducting connection has been produced between the rails.With the features according to claim 1, it is possible to first reliably check if the device is properly connected to its respective the galvanic conductor such as the rail of a railway, and only after that, the elements for connecting the device to the further galvanic conductor for short-circuiting become available to the personell. In this way, safeguarding the personell is guaranteed.

As a result of the combination of an unfolding/telescopic/fold-out facility for the locking means and an end of said means which can be resiliently pushed in, there is less risk of permanent deformation of the short-circuiting equipment, with the result that the latter continues to fit well between the rails. Furthermore, as a result of the provision of an unfolding/fold-out/telescopic facility in combination with the locking in the unfolded/folded-out/extended position, it is possible to guarantee better protection against unintentional removal of the locking means, e.g. a lance element, from between the rails. Furthermore, the preferably elongated locking means is easier to handle when in the folded-up/folded- in/retracted position. If the locking means or lance element is of the box type, preferably carrying the hook element inside, it has a rather rigid structure which assures proper and reliable connection to its respective galvanic conductor as well.

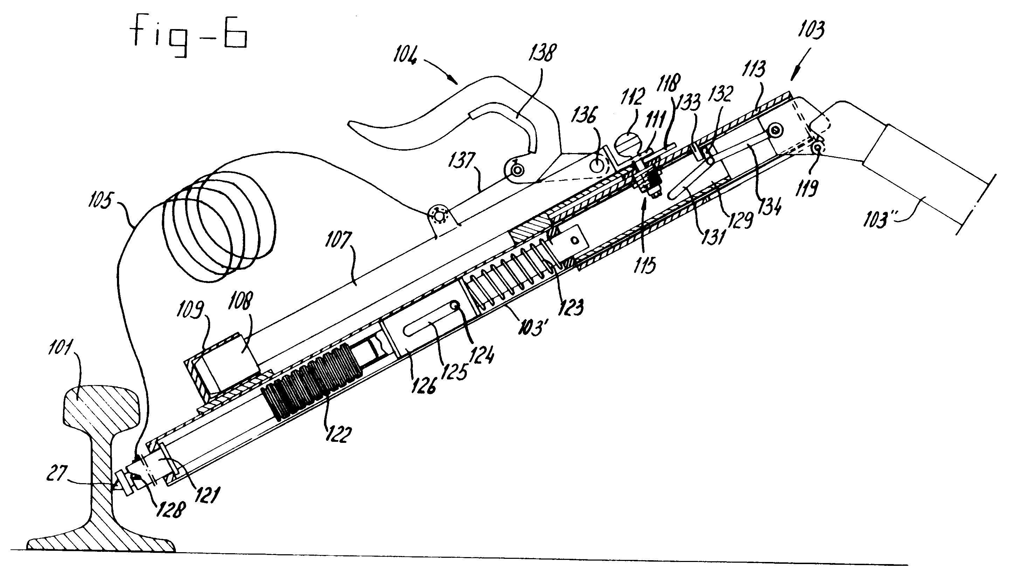

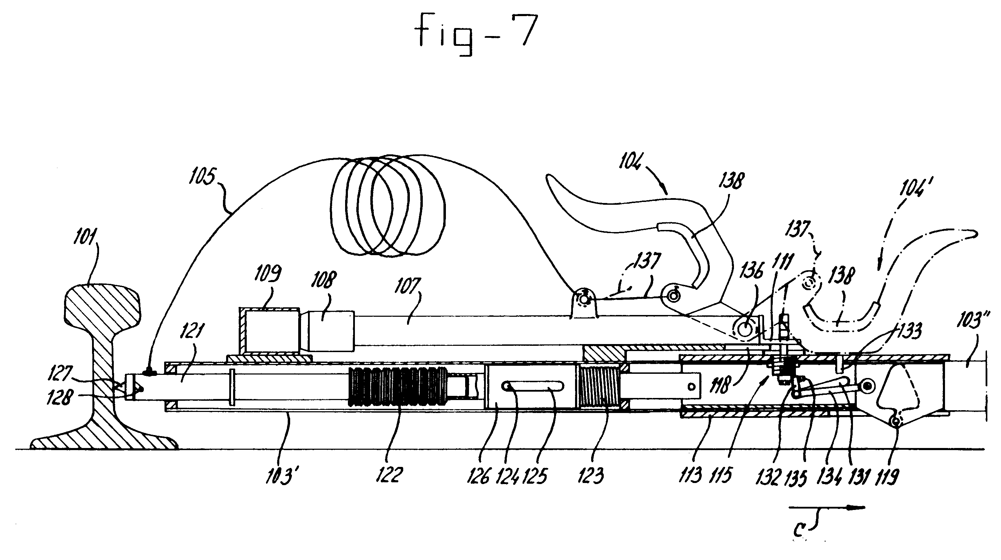

The present invention also proposes in claim 8 a hook element or bracket element which is movable between two positions, one position for hooking interaction with a catenary wire and one release position, the bracket element being held in its hooked position by means of a breakable element, for example a fuse wire. In the event of an inadmissibly high voltage on the catenary wire, said fuse wire will melt through, so that the bracket element assumes its release position and detaches from the catenary. Firstly, the bracket element is thus reliably released from the catenary. After all, when the breakable element melts through any galvanic connection between the "earth" and the bracket element is broken. On the other hand, the bracket element will fall to the ground after the breakable element has melted through. On the one hand, it is thus easy to establish visually and from a considerable distance away whether or not the catenary is live. On the other hand, the bang when the fuse wire burns through and the bracket element then hits the ground is an audible indication that the catenary is no longer dead. The subject matter of this **claim** and its dependant claims could be put into practice independent from the subject matter of claim 1 as well. Reservations are made for filing a divisional application on the basis of claim 8 (smeltdraad) and the fig. 6 and 7 if it is concerned with the subject matter indicated with reference numbers 137 and 138 and there combination with the parts from those drawings engageing therewith.

It is also advantageous according to a further aspect of the invention if the pole for making the galvanic connection with the catenary wire can be folded up, for example is telescopic or foldable, so that said pole can be stored in or on the short-circuit device according to the invention. It is also useful if the short-circuit device is of a handy size and not too heavy, so that it can be lifted by one person or at most two people.

According to the invention the hook for making the galvanic contact with the catenary wire is preferably accommodated in an insulating sleeve, as indicated in claim 9. Only when it has been established that reliable galvanic contact can be made with the catenary wire does the hook protrude from said sleeve. In this context it is preferable if the hook "snaps" around the catenary wire. For example, this is effected with spring assistance, so that the galvanic connection is made within a very short time. There is then no risk of sparking.

The various objectives are achieved by means of the features comprised in the appended claims.

The invention will be explained in more detail below with the aid of a non-limiting embodiment, with reference to the appended drawing. In the drawing:
Fig. 1 shows, diagrammatically, a perspective view of a first embodiment of the device according to the present invention, in use for short-circuiting a catenary wire and rails of a railway, parts of which are shown;
Fig. 2a shows a top view of the box-shaped part of the device according to the invention, with the lid open, which is to be connected to the rails;
Fig. 2b shows a cross-sectional side view along the line II-II in Fig. 2a, the position of the rails also being shown;
Fig. 3 shows detail III from Fig. 2b;
Fig. 4 shows a cross-sectional side view of the contact head of the device, in engagement with a twin catenary wire, the interior of said head also being shown;
Fig. 5 shows a perspective view of part of a railway with a second embodiment of the short-circuiting facility in accordance with the present invention;
Fig. 6 shows a side view, partially in cross-section and partially exposed, of the short-circuiting facility of fig. 5, shown in a first position, in combination with a rail which is shown in cross-section;
Fig. 7 shows a view corresponding to Figure 6, with the short-circuiting facility shown in a second position; and
Fig. 8 shows a perspective view of a detail of the short-circuiting facility of fig. 5, with the components shown in the assembled position some distance apart.

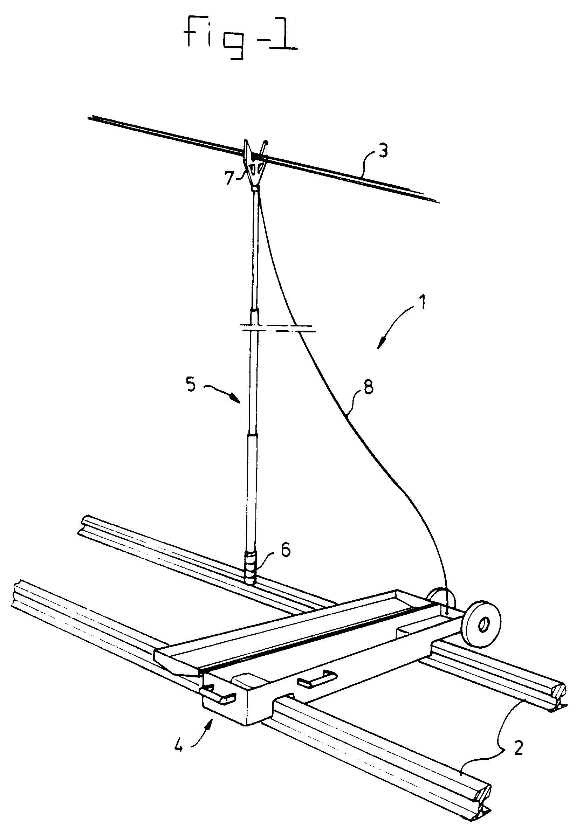

Fig. 1 shows, diagrammatically, part of a conventional railway 1, with two rails 2 and a catenary wire 3 of twin-conductor design. All of these elements run parallel to one another some distance apart. For the sake of clarity, sleepers, catenary wire poles, fixing elements, etc. are not shown.

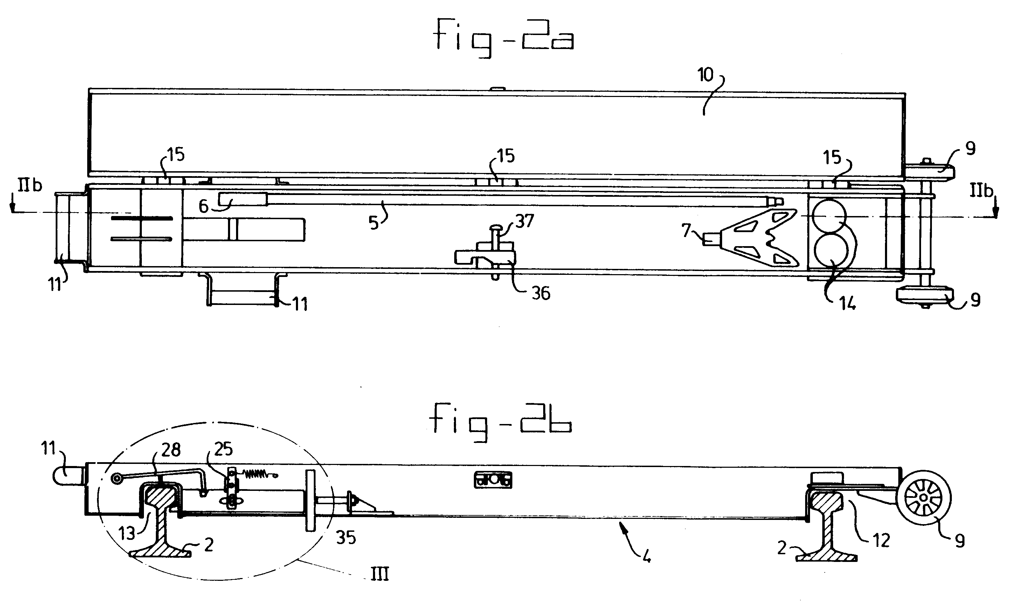

A mobile box- or case-shaped body 1, hereinafter referred to as case 1, is shown lying over the rails 2 and connecting said rails galvanically to one another. The case 1 is constructed of relatively thin-walled metal plate material. Said case 1, which forms part of the present invention, is described in more detail below with reference to Figs 2a, 2b and 3. Fig. 1 also shows a pole 5, part of which has been omitted, which at its one end has a hand grip 6 and at its other end a short-circuit head 7. Said pole 5 is composed of lengths which can be slid telescopically into one another. Said lengths are of dimensions such that, when the pole 5 is in the retracted state, said pole has a length which approximately corresponds to the customary distance between the rails 2. The pole 5 then fits in the case 4, as is shown in Fig. 2a. If the lengths are extended to the maximum, the pole has a length of more than three metres. At present a length of 5 to 6 metres has been found to be the most advantageous. This length is sufficient so that an adult standing next to the rails 2 and gripping the pole 5 firmly by the grip 6 is able to reach the catenary wire 3, which usually is suspended about 5.5 metres above the rails, with the head 7. Of course, the pole 5 can, for example, also be made up of lengths which can be inserted into one another by the ends, or, for example, can be constructed as an articulated pole, with a locking mechanism which is releasably locked in position when the pole 5 is folded out.

A short-circuit wire 8 is galvanically connected to the short-circuit head 7. The other end of said short-circuit wire 8 is galvanically connected to the case 4. Consequently, the catenary wire 3 is galvanically connected, via the short-circuit head 7 and the short-circuit wire 8 and the case 4, to the two rails 2.

The construction and the functioning of the case 4 will now be explained in more detail below with reference to Figs 2a, 2b and 3. The case 4 is shown with the lid 10 opened, which lid is hingeable about hinges 15. The case 4 has two wheels 9 at one end. Handles 11 are fitted at the opposing end. When held by the side where the handles 11 are located, and tipped on end, the case 4 can easily be transported, rolling on the wheels 9, by one person, said person never having to lift more than 25 kg with the structure as preferred at present.

At either end, the case 4 has an open recess 12 and 13, respectively, which recesses each run essentially perpendicular to the longitudinal direction of the case 4. Said recesses 12 and 13 can each accommodate the top section of a respective rail 2, as is shown. Two relatively powerful permanent magnets 14 are arranged at the recess 12 in the case 4, which magnets engage on the top of the respective rail 2 as soon as the case 4 is lowered onto said rail with the recess 12 engaging around said rail. Said magnets 14 have a strength such that the case 4 cannot be lifted straight up from the rail 2 by hand, for example by pulling on the wheels 9, at the side where the recess 12 is located. On the other side it is possible, if necessary, to overcome the magnetic force by manual power, by lifting the case by the handles 11.

Mechanical locking of the case with the respective rail 2 takes place at the recess 13. This is shown in more detail in Fig. 3. The recess 13 is formed by a U-shaped section 16 which extends over the full width of the case 4 at the bottom. Openings 17 and 18 respectively are located in the leg shown on the right in the drawing and in the body of said U-shaped section, which openings open into the interior of the case. A guide sleeve 19 which runs inside the case 4 in the longitudinal direction thereof is arranged alongside the hole 17 to the right thereof in the drawing, which sleeve is shown partly cut open here for the sake of clarity. A tongue 21 is accommodated inside the sleeve 19 so that it can slide backwards and forwards in the longitudinal direction. At the end facing towards the section 16, the tongue 21 has a pawl 22, which is able to protrude through the hole 17 and into the recess 13 surrounded by the section 16, as is shown. In said extended position protruding into the recess 13, the pawl 22 extends beneath the thickened head of the rail 2, as shown. In this position it is impossible to lift up the case 4 by hand or using simple mechanical tools, such as a crowbar (not shown), so that said case comes away from the rail 2. If the tongue 21 is in the retracted position, which is shown diagrammatically by dash-and-dot lines, the pawl 22 releases the recess 16 and thus the rail 2.

An efficient mechanism of simple construction which operates reliably and is largely maintenance-free is accommodated in the case 4 to ensure that the case 4 is locked automatically, that is to say without human intervention, on the rail 2 through the agency of the pawl 22. To this end the tongue 21 is connected to a draw spring 23, which is arranged outside the sleeve 19 and which pretensions the tongue 21 in the direction of arrow A. Said spring 23 is driveably connected via lever arms 25 on either side of the sleeve 19, which lever arms can be pivoted about a fixed spindle 24 directed essentially parallel to the longitudinal direction of the rail 2, to the tongue 21, by studs 26 which likewise protrude on either side of the sleeve 19 through longitudinal slits 27 in said sleeve.

With regard to the spring 23, Fig. 3 also shows an alternative, which is indicated by dash-and-dot lines. According to said alternative, the spring 23 is located inside the sleeve 19. The spring 23 is now a compression spring, which is made up of cupped spring washer segments. The compression spring 23 is pushed onto the spindle which connects the tongue 21 with the thumbwheel 35, which will be described in more detail below.

On the side facing towards the opening 32 in the sleeve, the tongue 21 is provided with a recess 33. As is shown, when the tongue 21 is in the retracted position, said recess 33 is in register with the opening 32 in the sleeve 19. The tongue 21 is held in the retracted position, which is shown by dash-and-dot lines, by an arm 28 arranged above the section 16. Said arm 28 can be pivoted about a spindle 29, which runs parallel to the spindle 24, and under the influence of gravity tries to pivot in the direction of the arrow B. At the opposite end to the spindle 29, the arm 28 has a hook element 31, which is suitable for inserting through the opening 32 in the top of the sleeve 19 and into the recess 33 in the tongue 21 (not shown). A sensor 34 which extends transversely from the arm 28 is also located on said arm 28 in register with the opening 18. Said sensor, protruding through the opening 18, engages with the top surface of the rail 2. The length of the sensor 34 and of the hook element 31 are such that the hook element 31 is located above the top of the tongue 21 and therefore does not engage with the recess 33 therein when the sensor 34 is not or is virtually not protruding through the opening 18 into the recess 13. This is the situation which is shown in Fig. 3, in which the top surface of the rail 2 engages with the free end of the sensor 34 and holds the latter pressed up. The tongue 21 is then released by the hook element 31 and is pushed out under release of the tension in the spring 23, so that the pawl 22 then protrudes into the recess 13. As the spring mechanism 23 and the locking mechanism 28, as well as the tongue 21, can be accommodated in an inaccessible manner in an enclosed housing by fitting suitable plating within the case 4, once the tongue 21 has been unlocked with the pawl 22 protruding into the recess 13 it cannot be returned to the retracted release position without special tools. The tongue 21 can be returned to the retracted position against the action of the spring, in order to be locked in position engaging with the hook element 31 in the recess 33, by means of the thumb wheel 35, which is screwed on a threaded extension of the tongue 21 and supported against the sleeve 19 and partially protrudes from the bottom of the case 4 and is accessible only from the bottom of the case 4 after, for example, removal of a cover cap (not shown). It is, of course, also possible to provide a different facility for returning the tongue to its original position and to provide an unlocking facility. What is important is that a sensor is provided which can be brought into engagement with the rail 2. If said sensor has been made to engage in the desired manner with said rail, said sensor gives rise to unlocking of a pawl mechanism, which then engages on said rail 2 in a locking manner, for example under the action of a pretensioning force. Instead of a draw spring or compression spring, it is also possible to use fluid pretensioning as the pretensioning force.

In the context of the alternative for the spring 23, constructed as a compression spring as shown by dash-and-dot lines in Fig. 3, an alternative mode of operation of the thumb wheel 35 must also be mentioned. In combination with the compression spring 23 inside the sleeve 19, the (compressive) tension of the spring 23 can be released by operating the thumb wheel 35. The tongue 21 can then be pushed back to the original position, in order to return the pawl 22 to the retracted position, by operating the lever 25 in a suitable manner.

Although this is not shown in more detail, the lever 25 also drives an unlocking mechanism 36 (Figs 2a and 2b) of the lock 37 for locking the lid 10 of the case 4 in the closed position. Consequently, the lock 37 can be unlocked, and the lid 10 opened, only when the recess 13 engages in the correct manner around the rail 2 and the pawl 22 is thus extended. Only then can access be obtained to the contents of the case 4, such as the folded-in pole 5, the short-circuit head 7 and the short-circuit wire 8. Thus, as long as the case has not been connected in the correct manner with the two rails 2 and the latter are therefore not reliably galvanically coupled to one another and to the case 4, it is impossible to make a galvanic coupling with the catenary wires 3.

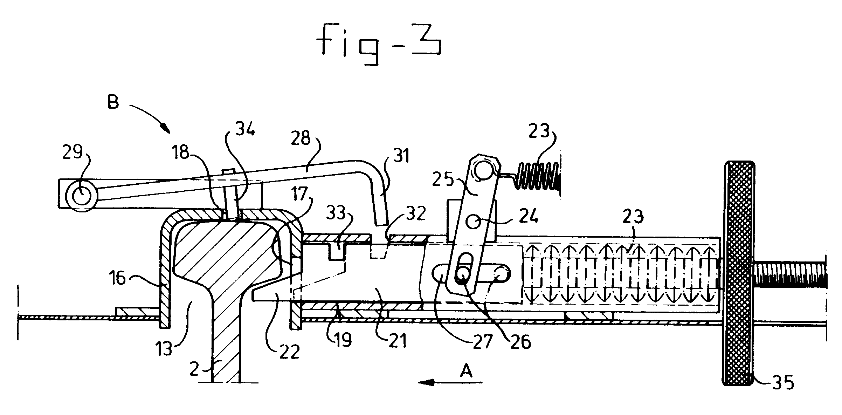

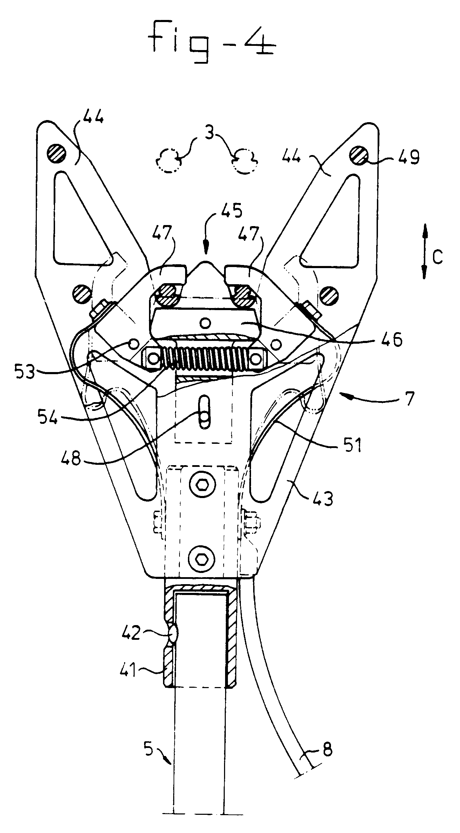

Fig. 4 shows the short-circuit head 7 in more detail in longitudinal section. The position in locked engagement with the catenary wires 3 is shown by solid lines. Dash-and-dot lines show the position some distance away from the catenary wires 3, in the unlocking position. On the underside, the head 7 has a socket 41 in which the end of the pole 5 is detachably inserted. A spring-loaded ball 42 which protrudes beyond the side wall of the pole, or another elastically resilient snap-fit element, which engages in an opening or recess in the side wall of the socket 41, is used, for example, to lock the pole 5 on the head 7, as shown.

The head 7 is formed as two identical, essentially flat bodies 43, each of which has an essentially U-shaped or fork-shaped free end with teeth or guide arms 44. A wedge element 40 is arranged centrally between the teeth 44, which wedge element extends into the plane of the teeth 44 and forms an integral whole with the head 7. Together with the teeth 44, said wedge element 40 defines one recess on either side thereof for accommodating one catenary wire 3 in each case, as shown. This prevents said individual wires being squeezed towards one another, and consequently kinking out, during engagement by the short-circuit head. In Fig. 4 the fork-shaped part, with the arms 44, of the front body 43 in the drawing has been exposed for the sake of clarity. Said bodies 43 are made of a non-galvanic material, such an injection-mouldable thermoplastic or thermosetting plastic, for example PVC, nylon or polythene, optionally reinforced with (glass) fibres. The two bodies 43 are arranged coaxially some distance apart and parallel to one another, so as to define between them the socket 41, as well as a galvanic snap-fit mechanism 45. The bodies 43 are also connected to one another in other locations by means of rib-shaped components, such as the connecting stubs 49, in order to form a stable element.

The snap-fit mechanism 45 is formed by a central guide 46 and a snap-fit hook 47 on either side thereof. The guide 46 is movable up and down in the direction of the arrow C. To this end, the guide 46 is connected to the bodies 43 in a slit guide 48. The snap-fit hooks 47 are movable between a release position (dash-and-dot lines) and a locking position (solid lines) in order, in said position, together with the guide 46 and the wedge element 40, to hold one wire 3 of the catenary wire clamped between them. In the release position of the snap-fit hooks 47, the guide 46 is in an extended position (dash-and-dot lines). By retracting the guide 46 from said extended position (solid lines), the snap-fit hooks 47 are forced into the locking position. The snap-fit hooks 47 are suitable for making a galvanic contact with the catenary wire 3, to which end they are manufactured from galvanic material or have a galvanic coating, or something similar, on that side thereof which faces towards the catenary wire 3. As is shown, a galvanic guide 51 runs from each snap-fit hook 47 to a galvanic conducting bolt 52, with which the short-circuit wire 8 is also in galvanic contact.

In the plane of the drawing, each snap-fit hook 47 can be pivoted about a respective spindle 53 between the release and the locking position. The respective ends of a common compression spring 54 are attached to each of the snap-fit hooks 47 some distance away from said spindle 53. The point at which said spring 54 is joined to the snap-fit hooks 47 with respect to the spindle 53 is such that in the release position of the snap-fit hooks 47 said joint is located above the level of the spindle 53 in the drawing, and in the locking position is located below the level of said spindle 53. As a result of the pushing action of the spring 54 in each of said outermost positions of the snap-fit hooks 47, these are stable positions. By means of the guide 46, which engages with the two snap-fit hooks some distance away from the spindle 53, the snap-fit hooks 47 are pivoted from the release position into the locking position. During this operation the tension in the compression spring 54 will initially be further increased since the distance between the joints between the spring 54 and the respective snap-fit hooks is being continually reduced. This continues until the spindles 53 and the ends of the compression spring 54 are in line. In this position a labile equilibrium prevails. On further retraction of the guide 46, the tension in the compression spring will be relieved and the snap-fit hooks 47 will pivot forcefully into the locking position, irrespective of the further movement of the guide 46. With this arrangement, the hook ends of the snap-fit hooks 47 engaging around the wire 3 are shaped in such a way that said hook ends assume a retracted position with respect to the arms 44, and consequently are not able to make galvanic contact with the wires 3, as long as the snap-fit hooks are pivoting into the locking position.

The guide 46 is moved from the extended position into the retracted position by bringing the guide 46 into engagement with the wires 3 and then pushing the head 7 further, with the aid of the pole 5, in the direction of the wires 3. Since the wires 3 are arranged largely in a fixed position, the guide 46 will consequently be depressed, for example against the action of a drawback spring, which is not shown in more detail here.

In this way a short-circuit is produced between the rails 2 and the catenary wires 3 by means of the apparatus shown in Figs 1-4, as follows:

In the workshop, the tongue 21 is pretensioned and locked with the hook 31. The snap-fit hooks 47 are also brought into the release position. The pole 5 and the short-circuit head 7 are stored in the case 4, the lid 10 of which is then closed and locked. The case is then, for example, stored in a fire engine.

In connection with the alternative with the compression spring 23, said spring 23 is initially relaxed. If the tongue 21 has been placed in the initial position, with the pawl 22 in the retracted position, the lid 10 of the case 4 is then closed, by which means the lock mechanism 36 is locked. The thumb wheel 35 is then operated to bring the compression spring 23 under tension, after which the case is ready for use.

When the case 4 has been moved to the intended location along the rails, said case is then positioned over the rails 2, as shown in Fig. 1. Because the rails 2 are enclosed in the correct manner by the recesses 12 and 13, the sensor 34 makes contact with the top of the rail 2 and the tongue 21 is released, so that the pawl 22 locks the rail 2. At the same time, the lock of the lid 10 is sprung. The pole 5 is extended and the short-circuit head 7 is placed on the pole 5. Whilst the short-circuit wire 8, which is firmly connected to the short-circuit head 7 at one end and to the case 4 at the other, unrolls automatically, the short-circuit head 7 with the pole 5 held by the hand grip 6 is moved towards the catenary 3. Using the arms 44, the short-circuit head 7 is guided so that it is centred in such a way that the catenary wires 3 each come to engage on either side of the wedge-shaped head with the guide 46. On pushing up the short-circuit head 7 further against the catenary wire 3, the guide 46 is depressed and the snap-fit hooks 47 snap resiliently around the wires 3. Only then is there an electrically conducting contact between the wires 3 and the short-circuit head 7 and, thus, between the rails 2 and the wires 3. The pole 5 can now be removed from the short-circuit head 7, which remains behind suspended on the wires 3.

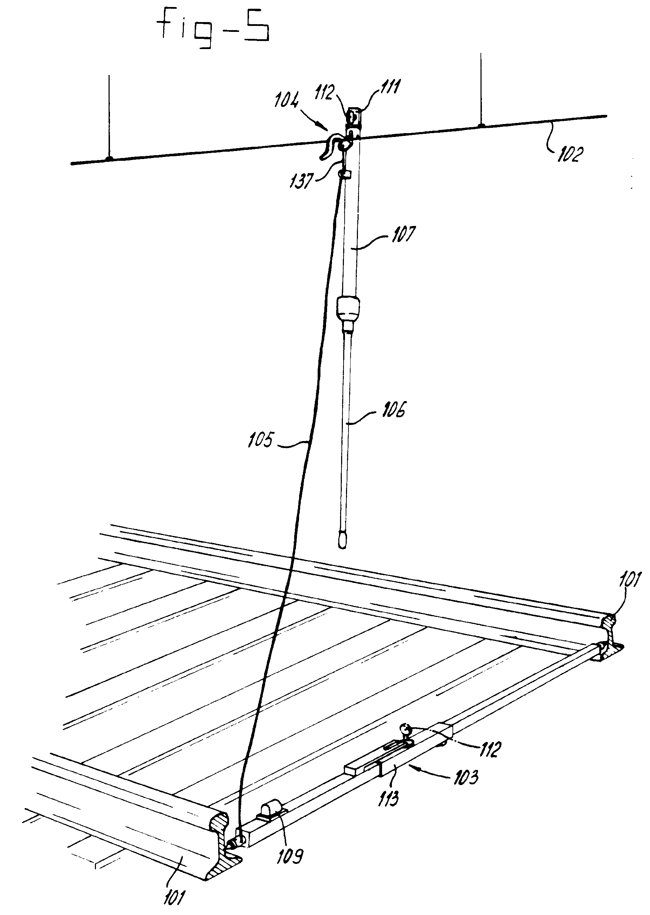

Figure 5 shows the rails 101 of a railway, with the catenary 102 located above these. A foldable short-circuit bar 103 is clamped between the rails 101, in accordance with one embodiment of the invention. A short-circuiting hook 104 in accordance with the present invention is hooked onto the catenary 102. Said short-circuiting hook 104 is galvanically connected via a flexible electrical lead 105 to the short-circuit bar 103. The catenary 102 is thus earthed, via the short-circuiting hook 104, the electrical lead 105 and the short-circuit bar 103, on the rails 101. The short-circuiting hook 104 is connected to a pole 106 in such a way that an operator standing on the ground is able to hang the short-circuiting hook 104 over the catenary 102. The pole 106 can then optionally be detached from the short-circuiting hook 104. The short-circuiting hook 104 has a rod 107, the function of which will be explained in more detail below. The lower end of said rod 107 in Figure 5 is to be connected to the pole 106.

As can be seen more particularly from Figures 6 to 8, the rod 107 of the short-circuiting hook 104 can be connected to the short-circuit bar 103 in an easily detachable manner in such a way that said rod 107 is released only when the short-circuit bar 103 is connected in the correct manner to the two rails 101. To this end, one end 108 of said rod 107 is inserted into a holder 109 on the short-circuit bar 103. At its other end, the rod 107 has a lip 111. A key 112 is inserted through a hole in said lip 111 so that it cannot be lost. For the sake of clarity, the position of the key 112 on the short-circuit bar 103 is indicated in a notional manner in Figure 5. By this means, the key 112 can be coupled to the short-circuiting hook 104 only at the sleeve 113. As will become more apparent below, said key 112 can also be inserted in a hole 114 in the sleeve 113. When the short-circuit bar 103 is in the folded-out position, said sleeve 113 can be slid along said bar when it has been established that the short-circuit bar 103 is in engagement with the two rails 101. With this arrangement, when the short-circuit bar 103 is in this position (see Figure 7), the end 108 of the rod 107 can be slid in and out of the holder 109 at the same time as the sleeve 113 is slid along the short-circuit bar 103. By sliding the end 108 of the rod 107 out of the holder 109 in this way, the short-circuiting hook 104 can be detached from the short-circuit bar 103, after turning the key 112.

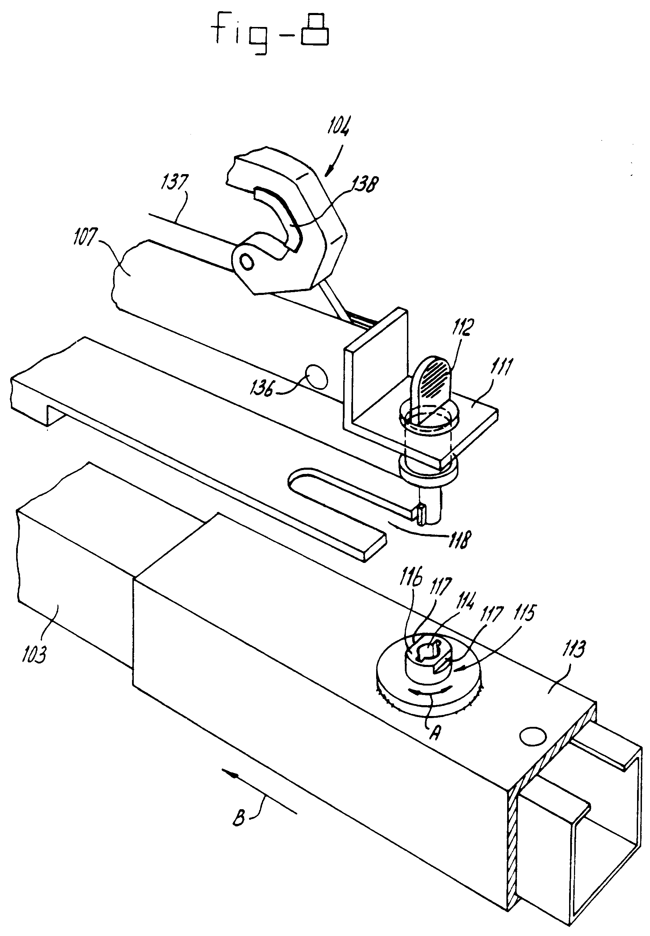

As can be seen more particularly from Figure 8, the hole 114, in which the key 112 can be inserted, forms part of a lock assembly 115. Said lock assembly 115 has a stub 116 which is rotatable about its axis (arrow A) and has flats 117 on two opposing sides. In addition, there is a slit 118 above the sleeve 113, as shown. The width of the slit 18 is smaller than the largest cross-section dimension of the stub 116 but larger than the distance between the opposing flats 117. The mutual arrangement is such that, in the assembled state, the stub 116 extends at least to the level of the slit 118. The sleeve 113 can therefore be slid in the direction of the arrow B (Figure 8) only if the stub 116 has been turned through 90° with respect to the position shown. In this position of the stub 116, the key 112 will be anchored in the lock assembly 115 and it will thus not be possible easily to remove it therefrom. Consequently, when the sleeve 113 (Figure 6) is in the position in which the stub 116 has been slid to the sufficient extent into the slit 118, the rod 107 of the short-circuiting hook 104 is reliably anchored by its two ends 108, 111 to, respectively, the holder 109 and the lock assembly 115.

Advantageously, according to the present invention provision is made for the sleeve 113 to be slid from its unlocking position, shown in Figure 6, into its locking position, shown in Figure 7, after it has been mechanically established that the short-circuit bar 103 is reliably clamped between the rails 101. The short-circuit bar 103 is folded out as it is clamped between the rails 101. To this end, the two short-circuit bar sections 103' and 103'' will hinge mutually with respect to the common hinge point 119. During this operation, the end 121 of the short-circuit bar section 103' will be resiliently pressed inwards. To this end a first spring assembly 122 and a second spring assembly 123 are arranged inside the short-circuit bar section 103'. The spring 123 is weaker than the spring 122. In addition, the spring 123 is active only over a limited portion of the path over which the end 121 can be pushed in. The travel of the spring 123 is limited by a pin 124, which extends inwards from the inside wall of the short-circuit bar section 103' into a slit 125 which is made in a wall 126 of, for example, a bush which is slidable together with the end 121. Optionally, the pin 124 and the slit 125 can be omitted. The length of the spring 123 must then be so selected that said spring is fully compressed when the end 121 is still not fully pushed in. However, use of the pin 124 inserted in the slit 125 is more reliable. In Figure 7 the pin 124 is shown in the position in which the spring 123 has reached the position in which it is pushed in to the maximum. Once the pin 124 is in this position, the end 121 can be resiliently pushed even further into the short-circuit bar 103 only under compression of the stronger spring assembly 122. Good clamping of the short-circuit bar 103 between the rails 101 is thus guaranteed. The end 121, like the opposite end of the short-circuit bar 103, has a pointed end 127, intended to penetrate through the layer of rust which is customary on a rail. Furthermore, said end 127 can, to a small extent, likewise be resiliently pushed in with respect to the other part of the end 121. With this arrangement use has been made of pins which extend radially outwards from said end 127 and are guided in grooves 128 which run obliquely with respect to the longitudinal axis of the short-circuit bar 103. In this way, when the end 127 is pressed into the end 121 said end 127 will at the same time execute a rotary movement, as a result of which the layer of rust present on the rail 101 will be driven through even more reliably to provide a reliable galvanic connection. The spring action between the end 127 and the end 121 is preferably weaker than the spring 122 and stronger than spring 123, as a result of which the rotation is invoked following the build-up of pressure in the main spring 122. As shown, the spring 123 can be a helical spring, whilst the spring 122 is composed of spring cups. Obviously, other types of spring can, of course, also be chosen.

When the end 121, and thus the spring 123, is pushed in, a wall 129 of, for example, a U-section is moved in the direction of the hinge 119. A guide slit 131 is located in said plate 129, which guide slit, as is shown, slopes upwards in the direction of the hinge 119. A pawl 132 is guided in said slit 131, which pawl, in the position shown in Figure 6, hooks behind a pawl 133. The pawl 133 is located on the slidable sleeve 113. The pawl 132 is linked via an arm 134 to the short-circuit bar section 103'. Consequently, it is not possible, in the position shown in Figure 6, to move the sleeve 13 in the direction of the hinge 119. By pushing in the end 121, the pawl 132 will be forced to move downwards by the slit 131 so as to come free of the pawl 133 (Figure 7). In this position, the sleeve 113 can be moved in the direction of the arrow C. At the same time, the end 108 of the rod 107 then comes out of the holder 109. The stub 116 also comes out of engagement with the slit 118. The key 112 can thus be turned back a quarter turn, so that said key can be removed from the key assembly 115.

A cam 135 is also located on the key assembly 115. At the same time as the key 112 is turned into the release position (that is to say from the position shown in Figure 6 into the position shown in Figure 7), the cam 135 on the key assembly 115 is turned and engages behind the pawl 132 (Figure 7). Therefore, as soon as the key 112 has turned into the position shown in Figure 7, the cam 135 prevents the sleeve 113 from being able to be moved in the direction of the arrow B (Figure 8). In the position according to Figure 7, the key 112 can be removed from the hole 114, so that the short-circuiting hook 104 is free of the short-circuit bar 103.

Furthermore, the sleeve 113 is constructed in such a way that said sleeve essentially prevents any hinging between the short-circuit bar sections 103' and 103''. Consequently, in the position shown in Figure 7 the short-circuit bar 103 cannot be folded in without moving the sleeve 113. Movement of the sleeve 113 into the position shown in Figure 6 is possible only when the key 112 has been inserted in the hole 114 and has been turned so that the cam 135 releases the pawl 132.

As is shown in Figures 6 and 7, the short-circuiting hook 104 is pivotable about the shaft 136. The hook position in which the short-circuiting hook 104 can be reliably hooked over the catenary 102 is indicated by solid lines. In this position, the short-circuiting hook 104 is held by a fuse wire 137. Said wire 137 is connected at one end to a galvanic coating 138 on the short-circuiting hook 104, which, incidently, is made of an insulating, preferably plastic, material. At the other end, said fuse wire 137 is connected to the flexible current wire 105. In Fig. 7 dash-and-dot lines show the release position of the short-circuiting hook 104, which then bears the reference 104'. The fuse wire 137 has then given way.

Obviously, variants can be conceived which likewise fall under the scope of the description. For instance, the short-circuit bar 103 can be used in combination with another type of short-circuiting hook 104, for example the conventional short-circuiting hook 104 without the automatic release position. Instead of a fuse wire 137, another breakable body can be used which gives way or is otherwise deformed when it is established that an inadmissible voltage is applied to the catenary 102. Other embodiments of the ends of the short-circuit bar 103 can also be conceived. Moreover, it is not a requirement under all circumstances that the short-circuit bar 103 is provided with elements for connecting the short-circuiting hook 104 so that it is easily detachable in such a way that said hook 104 is released only when the short-circuit bar 103 is reliably galvanically connected to the two rails.

Instead of for a catenary, application for a power supply rail just above or between the rails of the track, such as is widely used for underground lines, is also conceivable.

### EXAMPLES

1. Device for making a galvanic connection between two conductors, preferably the rails of a railway, comprising an elongated element which is intended to be brought into contact by each of its ends, each end being in contact with one conductor, characterised in that the elongated element (103) can be folded in or folded up or is telescopic and is provided with a locking element (113) for holding it in its unfolded or extended or folded-out position, in which unfolded or extended or folded-out position the element bridges the gap between the two conductors (101), and in that at least one of the ends (121) of the element is constructed such that it can be resiliently pushed in.
2. Device according to example 1, wherein the element comprises two elongated sub-elements (103', 103'') which are hingeably (119) connected to one another, which sub-elements are essentially coaxially in line when the element is in the folded-out position, and in that a sleeve-shaped element (113) is present which is movable in the longitudinal direction of the two sub-elements and is suitable for enclosing the adjoining ends of said sub-elements when said sub-elements are in the aligned position in order substantially to prevent any pivoting movement between them.
3. Device according to examples 1 or 2, wherein a restraining element (132) is arranged for restraining the locking element (113) in its release position, which restraining element is driveably connected to that end of the element which can be resiliently pushed in, in order to be movable out of and into its restraining position.
4. Device according to one of the preceding examples, wherein a stop element (135) is arranged in order to restrain the locking element (113) in its locking position.
5. Device according to examples 3 and 4, wherein the stop element (135) is suitable for locking interaction with the restraining element (132) in its release position.
6. Device according to example 4 or 5, wherein the stop element (135) can be brought into its restraining position by means of a key (112) or other separate turning element which is easy to remove from the device.
7. Device according to one of the preceding examples, wherein the end (121) which can be resiliently pushed in is driveably coupled with a guide element (131) which is movable in the direction in which said end is pushed in and over which the restraining element (132) is guided in order to move in a direction transverse to the direction in which said end is pushed in.
8. Device according to example 7, wherein a first spring element (122) of higher resilience and a second spring element (123) of lower resilience are active between the end (21) which can be resiliently pushed in and the guide element and in that the degree of compression of the second spring element is limited (124, 125) to part of the path over which the end can be pushed in.
9. Device according to one of the preceding examples, wherein at least one of the sub-elements (103', 103'') and the locking element (113) carries retaining elements for retaining a separate assembly (104) on the device when the locking element is in the unlocking position and releasing said separate assembly (104) when said locking element is in its locking position.
10. Device according to example 9, wherein the sub-element (103', 103'') and/or the locking element (113) carries a sleeve element (109) for retaining, inserted therein, a corresponding protrusion (108) on said separate assembly.
11. Device according to example 9 or 10, wherein a hook element (112) can be inserted in the locking element (113) such that it is retained on the separate assembly (104) so that it cannot be lost, which hook element (112) can be fitted in a hook position on the locking element in order to hold the separate assembly (104) on said locking element, which hook element, in the unlocking position of the locking element, is also inserted through a lock element (118) which prevents it being possible to disconnect the hook element (112) from the locking element (Figure 8).
12. Device according to one of the preceding examples, which is suitable for galvanic coupling with a discharge assembly (104) for galvanic connection to a further conductor running some distance away above the ground, such as a catenary wire (102).
13. Device according to example 12, wherein the discharge assembly (104) is suitable for connection at one end to the sub-element (103') and at the other end to the locking element (113), in order to connect said discharge assembly to the device when the locking element (113) is in the unlocking position and to detach it easily from said device when the locking element is in its locking position (fig 7).
14. Device according to example, wherein the one end (108) of the discharge assembly is suitable for insertion in a sleeve element (109) on the sub-element, and its other end (111) bears a hook element (112) suitable for insertion in a corresponding part on the locking element (113).
15. Discharge assembly, optionally suitable for use in the combination with the device according to one of the preceding examples, wherein the discharge assembly is provided with a hook element (104) which is movable between an active position, in order to engage over the further conductor (102) so as to interact in a hooked manner with the latter, and a release position, so that it does not interact in a hooking manner with said further conductor, wherein said hook element is held in its active position by a breakable element (137).
16. Discharge assembly according to example 15, wherein the breakable element (137) is a meltable resistance wire, which can be galvanically coupled with said further conductor (102).
17. Discharge assembly according to example 15 or 16, wherein the hook element (104) has one or more galvanic regions (138) for galvanic contact with said further conductor.
18. Discharge assembly according to one of the preceding examples 15 to 17, wherein the breakable element (137) is galvanically coupled to the galvanic regions (138) on the hook element.
19. Discharge assembly according to one of the preceding examples 15 to 17, wherein said assembly is suitable for galvanic connection with a galvanic conductor (105), for example for earthing.
20. Short-circuit device for galvanic coupling of the galvanic catenary wire, running a considerable height above the ground, with one of the rails of the above-ground set of galvanic rails, located directly below said catenary wire, of a railway for electrically powered vehicles, provided with a flexible short-circuit wire of a length which is at least equal to the customary distance between the catenary wire and one of the said rails, at one end of which short-circuit wire a locking element of galvanic material is located, which locking element is suitable for engaging on either side of the rail, with respect to the longitudinal direction thereof in a releasable locking manner in order to produce a galvanically conducting connection with one of the rails, and at the other end of which short-circuit wire a hook element of galvanic material is located, which hook element is suitable for hooking engagement with the catenary wire in order to provide a galvanic connection thereto and which is suitable for pushing in an easily detachable manner onto the one end of an extension arm which has a hand grip at the other end, characterised in that the locking element has a pawl mechanism (21, 22) with locking mechanism (28) and a sensor element (34), wherein the pawl mechanism is movable between a retracted position, in which the locking element can be placed over the rail (2), and an extended position for locking connection on said rail, and the pawl mechanism can be held in the retracted position by the locking mechanism with the sensor element in a first position thereof, and the locking mechanism releases the pawl mechanism with the sensor element in the second position thereof, which can be assumed when the locking element has been positioned correctly over the rail.
21. Short-circuit device according to example 20, wherein the locking element is accommodated in box-shaped element (4) which is closable by means of a cover element (10), which cover element keeps the box-shaped element (4) closed by means of a closing element (37), which closing element releases the cover element (10) when the sensor element (34) is located in the second position, and the box-shaped element provides space for accommodating therein at least one of the components comprising the pole (5), the short-circuit wire (8) and the hook element (7).
22. Short-circuit device according to Example 20 or 21, wherein the locking element is connected to an element which is of a size and shape suitable for making galvanic contact with one rail, whilst the locking element is in galvanic, locking contact with the other rail.
23. Short-circuit device according to Example 22, wherein the box-shaped element has a length which is at least equal to the customary spacing between the two rails (2) and in that said box-shaped element is provided, close to the ends thereof, with, in each case, one recess (12, 13) on the side thereof which is to be turned towards the rails, in each of which recesses one rail (2) can be accommodated, whilst the locking element is arranged at at least one of the recesses in such a way that, in the extended position of said element, the pawl mechanism extends into said recess.
24. Short-circuit device according to Example 22 or 23, wherein magnetic means are provided for coupling with one or both rails (2).
25. Short-circuit device according to one of the preceding examples, wherein a sleeve (7) of galvanically insulating material is arranged around the hook element (47) and in that the hook element is movable between a first position in which said element is located inside some part of the sleeve and a second position in which said element extends beyond the sleeve, wherein the hook element is driveably connected to a sensor element (45) which brings the hook element from the first into the second position, which sensor element can be made to engage with the catenary wire (3) and is moved from the one position into the other position by pushing the sleeve (7) in the direction of said catenary wire (3).
26. Short-circuit device according to Example 25, wherein a set of hook elements (47) is provided, which elements are each pivotable about parallel spindles (53), wherein said hook elements (47) can be moved against the action of elastic, resilient restoring means (54) from the first position into the second position, and in that the sensor element (45) is arranged between said set of hook elements.
27. Short-circuit device according to Example 25 or 26, wherein the sleeve (7) has guide arms (44), which form a fork-shaped guide which narrows in the direction of the hook elements (47).
28. Short-circuit device according to Example 25, 26 or 27, wherein the hook element (47) can be snapped from the first position into the second position.
29. Short-circuit device according to Example 25, 26, 27, or 28, wherein the hook elements (47) come into engagement on a twin catenary wire (3) either side of a wedge-shaped component in such a way that, on each side of said wedge-shaped component, a hook element and said wedge-shaped component define a space for accommodating therein, in each case, one catenary wire only.
30. Hook element, constructed according to one of Examples 25 to 29.

## Claims

1. Short-circuit device for galvanic coupling of a first galvanic conductor, i.e. the galvanic catenary wire, running a, considerable height above the ground, with a second galvanic conductor, i.e. one of the rails of the above-ground set of galvanic rails, located directly below said catenary wire, of a railway for electrically powered vehicles, which device is provided with a short-circuit element, preferably flexible wire, of a length which is at least equal to the customary distance between the said first and second conductors, at one end of which short-circuit element a locking means is located, which locking means is suitable for engaging on said second conductor in a releasable locking manner in order to produce a galvanically conducting connection between said short-circuit element and said second conductor, and at the other end of which short-circuit element a hook element is located, which hook element is suitable for hooking engagement with the said first conductor in order to provide a galvanic connection between the said short-circuit element and said first conductor and which hook element is preferably suitable for pushing in an easily detachable manner onto the one end of an extension arm which has a hand grip at the other end, characterised in that the locking means (4, 103) has a pawl mechanism (21, 22, 132) for locking said locking means (4, 103) to said second conductor (2, 101), the pawl mechanism being movable between a first position, in which the pawl mechanism is not capable of locking the locking means (4, 103) to said second conductor, and a second position in which the locking means (4, 103) can be locked to said second conductor, the movement of the pawl mechanism from said first to said second position being obstructed by means of a further locking mechanism (28, 131), wherein this obstruction of the pawl mechanism can be removed by displacing a sensor element (34, 127), entering in contact with the second conductor wherein the displacement of the sensor element will be obtained by correctly engaging the locking means with said second conductor.

2. Device according to claim 1, wherein the locking means carries retaining elements for retaining a further part (5, 7, 8, 104) of the device to he used at a distance from said locking means on the device when the locking means is in the blocking position and releasing said separate assembly (4) when said locking means is in its locking position.

3. Device according to claim 1 or 2, wherein the locking means (4, 103) can be folded in or folded up or is telescopic and is provided with a locking element (13) for holding it in its unfolded or extended or folded-out position, in which unfolded or extended or folded-out position the element bridges the gap between two spaced parallel second conductors, and that at least one of the ends (121) of the locking means is constructed such that it can be resiliently pushed in.

4. Device according to Claim 1, 2 or 3 wherein a restraining element (28, 132) is arranged for restraining the locking means (4, 103) in its release position, which restraining element is driveably connected to the sensor mechanism (34) or that end (121) of the locking means which can be resiliently pushed in, in order to be movable out of and into its restraining position.

5. Device according to any of claims 1-4, wherein the locking means is accommodated in box-shaped element (4) which is closable by means of a cover element (10), which cover element keeps the box-shaped element (4) closed by means of a closing element (37), which closing element releases the cover element (10) when the sensor element (34) is located in the second position, and the box-shaped element provides space for accommodating therein at least one of the components comprising the pole (5), the short-circuit element (8) and the hook element (7).

6. Device according to Claim 5, wherein the box-shaped element has a length which is at least equal to the customary spacing between the two rails (2) of a rail way, and that said box-shaped element is provided, close to the ends thereof, with, in each case, one recess (12, 13) on the side thereof which is to be turned towards the rails, in each of which recesses one rail (2) can be accommodated, whilst the locking element is arranged at at least one of the recesses in such a way that, in the extended position of said element, the pawl mechanism extends into said recess.

7. Device according to one of the preceding claims, wherein the end (121) which can be resiliently pushed in is driveably coupled with a guide element (131) which is movable in the direction in which said end is pushed in and over which the restraining element (132) is guided in order to move in a direction transverse to the direction in which said end is pushed in.

8. Device according to one of the preceding claims, comprising a discharge assembly, wherein the discharge assembly is provided with a hook element (104) which is movable between an active position, in order to engage over said first conductor (102) so as to interact in a hook manner with the latter, and a release position, so that it does not interact in a hooking manner with said first conductor (102), wherein said hook element is held in its active position by a breakable element (137), a preferably meltable resistance wire which provides a galvanic connection between said first conductor and said discharge assembly.

9. Device according to claim 8, wherein a sleeve (7) of galvanically insulating material is arranged around the hook element (47) and in that the hookelement is movable between a first position in which said element is located inside some part of the sleeve and a second position in which said element extends beyond the sleeve, wherein the hook element is driveably connected to a sensor element (45) which brings the hook element from the first into the second position, which sensor element can be made to engage with the catenary wire (3) and is moved from the one position into the other position by pushing the sleeve (7) in the direction of said catenary wire (3).

10. Device according to claim 9, wherein a set of hook elements (47) is provided, which elements are each pivotable about parallel spindles (53), wherein said hook elements (47) can be moved against the action of elastic, resilient restoring means (54) from the first position into the second position, and in that the sensor element (45) is arranged between said set of hook elements.

## Patentansprüche

1. Kurzschlußvorrichtung zum galvanischen Koppeln eines ersten galvanischen Leiters, d.h. des galvanischen Fahrleiters, der in einer erheblichen Höhe über der Erde verläuft, mit einem zweiten galvanischen Leiter, d.h. einer der Schienen der oberirdischen Gruppe galvanischer schienen, der sich direkt unter dem Fahrleiter befindet, einer Bahnstrecke für elektrisch angetriebene Fahrzeuge, wobei die Vorrichtung mit einem Kurzschlußelement, vorzugsweise flexiblem Draht, mit einer Länge, die mindestens gleich dem üblichen Abstand zwischen dem ersten und zweiten Leiter ist, ausgestattet ist, wobei sich an einem Ende des Kurzschlußelements ein Verriegelungsmittel befindet, das sich zum Eingriff an dem zweiten Leiter auf eine lösbare verriegelnde Weise eignet, um eine galvanisch leitende Verbindung zwischen dem Kurzschlußelement und dem zweiten Leiter zu erzeugen, und sich an dem anderen Ende des Kurzschlußelements ein Hakenelement befindet, das sich für einen Hakeneingriff an dem ersten Leiter eignet, um eine galvanische Verbindung zwischen dem Kurzschlußelement und dem ersten Leiter bereitzustellen, wobei sich das Hakenelement vorzugsweise zum Andrücken auf eine leicht trennbare Weise auf das eine Ende eines Verlängerungsarms eignet, der an dem anderen Ende einen Handgriff aufweist, dadurch gekennzeichnet, daß das Verriegelungsmittel (4, 103) einen Sperrklinkenmechanismus (21, 22, 132) zum Verriegeln des Verriegelungsmittels (4, 103) an dem zweiten Leiter (2, 101) aufweist, wobei der Sperrklinkenmechanismus zwischen einer ersten Stellung, in der der Sperrklinkenmechanismus nicht in der Lage ist, das Verriegelungsmittel (4, 103) an dem zweiten Leiter zu verriegeln, und einer zweiten Stellung, in der das Verriegelungsmittel (4, 103) an den zweiten Leiter verriegelt werden kann, bewegbar ist, wobei die Bewegung des Sperrklinkenmechanismus aus der ersten in die Zweite Stellung mittels eines weiteren Verriegelungsmechanismus (28, 131) blockiert wird, wobei diese Blockierung des Sperrklinkenmechanismus durch Verschieben eines Sensorelements (34, 127), das einen Kontakt mit dem Zweiten Leiter eingeht, entfernt werden kann, wobei die Verschiebung des Sensorelements durch korrekten Eingriff des Verriegelungsmechanismus mit dem zweiten Leiter erzielt wird.

2. Vorrichtung nach Anspruch 1, wobei das Verriegelungsmittel Zurückhalteelemente zum Zurückhalten eines weiteren Teils (5, 7, 8, 104) der Vorrichtung trägt, der in einem Abstand von dem Verriegelungsmittel auf der Vorrichtung verwendet werden soll, wenn sich das Verriegelungsmittel in der Entriegelungsstellung befindet, und zur Freigabe der separaten Baugruppe (4), wenn sich das Verriegelungsmittel in seiner Verriegelungsstellung befindet.

3. Vorrichtung nach Anspruch 1 oder 2, wobei das Verriegelungsmittel (4, 103) ein- oder ausgeklappt werden kann oder teleskopisch ist und mit einem Verriegelungselement (13) ausgestattet ist, das es in seiner ausgeklappten oder ausgestreckten oder ausgefalteten Stellung halt, wobei das Element in der ausgeklappten oder ausgestreckten oder ausgefalteten Stellung die Lücke zwischen zwei beabstandeten parallelen zweiten Leitern überbrückt, und mindestens eines der Enden (121) des Verriegelungsmittels so aufgebaut ist, daß es nachgiebig eingedrückt werden kann.

4. Vorrichtung nach Anspruch 1, 2 oder 3, wobei ein Rückhalteelement (28, 132) zum Rückhalten des Verriegelungsmittels (4, 103) in seiner Freigabestellung angeordnet ist, wobei das Rückhalteelement antreibbar mit dem Sensormechanismus (34) oder dem Ende (121) des Verriegelungsmittels verbunden ist, das nachgiebig eingedrückt werden kann, um aus seiner Rückhaltestellung heraus oder in diese hinein bewegbar zu sein.

5. Vorrichtung nach einem der Ansprüche 1-4, wobei das Verriegelungsmittel in einem kastenförmigen Element (4) untergebracht ist, das mittels eines Abdeckelements (10) schließbar ist, wobei das Abdeckelement das kastenförmige Element (4) mittels eines Schließelements (37) geschlossen hält, wobei das Schließelement das Abdeckelement (10) freigibt, wenn sich das Sensorelement (34) in der zweiten Stellung befindet, und das kastenförmige Element Raum zur Unterbringung mindestens eines der Bauteile bereitstellt, die die Stange (5), das Kurzschlußelement (8) und das Hakenelement (7) umfassen.

6. Vorrichtung nach Anspruch 5, wobei das kastenförmige Element eine Länge aufweist, die mindestens gleich dem üblichen Abstand zwischen den beiden Schienen (2) einer Bahnstrecke ist, und das kastenförmige Element in der Nähe seiner Enden jeweils an einer seiner Seiten, die zu den Schienen hin gedreht werden soll, mit einer Aussparung (12, 13) ausgestattet ist, in der jeweils eine Schiene (2) untergebracht werden kann, während das Verriegelungselement an mindestens einer der Aussparungen so angeordnet ist, daß sich der Sperrklinkenmechanismus in der ausgestreckten Stellung des Elements in die Aussparung hinein erstreckt.

7. Vorrichtung nach einem der vorangehenden Ansprüche, wobei das Ende (121), das nachgiebig eingedrückt werden kann, antreibbar mit einem Führungselement (131) gekoppelt ist, das in der Richtung bewegbar ist, in der das Ende eingedrückt wird, und über das das Rückhalteelement (132) geführt wird, um sich in einer zu der Richtung, in der das Ende eingedrückt wird, quer verlaufenden Richtung zu bewegen.

8. Vorrichtung nach einem der vorangehenden Ansprüche, mit einer Entladebaugruppe, wobei die Entladebaugruppe mit einem Hakenelement (104) ausgestattet ist, das zwischen einer aktiven Stellung zum Eingriff über dem ersten Leiter (102), um auf eine hakenartige Weise mit diesem in Wechselwirkung zu treten, und einer Freigabestellung, so daß es nicht auf eine hakenartige Weise mit dem ersten Leiter (102) in Wechselwirkung tritt, bewegbar ist, wobei das Hakenelement durch ein unterbrechbares Element (137), einem vorzugsweise schmelzbaren Widerstandsdraht, das eine galvanische Verbindung zwischen dem ersten Leiter und der Entladebaugruppe bereitstellt, in seiner aktiven Stellung gehalten wird.

9. Vorrichtung nach Anspruch 8, wobei eine Muffe (7) aus einem galvanisch isolierenden Material um das Hakenelement (47) herum angeordnet ist, und das Hakenelement zwischen einer ersten Stellung, in der sich das Element im Inneren eines bestimmten Teils der Muffe befindet, und einer zweiten Stellung, in der sich das Element über die Muffe hinaus erstreckt, bewegbar ist, wobei das Hakenelement antreibbar mit einem Sensorelement (45) verbunden ist, wodurch das Hakenelement aus der ersten in die zweite Stellung gebracht wird, wobei bewirkt werden kann, daß das Sensorelement an dem Fahrleiter (3) eingreift und aus der einen Stellung in die andere bewegt wird, indem die Muffe (7) in die Richtung des Fahrleiters (3) gedrückt wird.

10. Vorrichtung nach Anspruch 9, wobei eine Gruppe von Hakenelementen (47) bereitgestellt wird, wobei die Elemente jeweils um parallele Spindeln (53) herum schwenkbar sind, und die Hakenelemente (47) gegen die Wirkung des elastischen, nachgiebigen Rückstellmittels (54) aus der ersten in die zweite Stellung bewegt werden können, und wobei das Sensorelement (45) zwischen der Gruppe von Hakenelementen angeordnet ist.

## Revendications

1. Dispositif de court-circuit pour le couplage galvanique d'un premier conducteur galvanique, c'est-à-dire le fil de caténaire galvanique, s'étendant à une hauteur considérable au-dessus du sol, avec un second conducteur galvanique, c'est-à-dire un des rails du groupe de rails galvaniques au-dessus du sol, situé directement en dessous dudit fil de caténaire, d'un chemin de fer pour des véhicules à commande électrique, ledit dispositif étant muni d'un élément de court-circuit, de préférence un fil métallique flexible, dont la longueur est au moins égale à la distance habituelle entre lesdits premier et second conducteurs, élément de court-circuit à une extrémité duquel est disposé un moyen de verrouillage, ledit moyen de Verrouillage étant approprié pour venir se disposer sur ledit second conducteur d'une manière procurant un verrouillage amovible dans le but d'établir une connexion conductrice par voie galvanique entre ledit élément de court-circuit et ledit second conducteur, et élément de court-circuit à l'autre extrémité duquel est disposé un élément en forme de crochet, ledit élément en forme de crochet étant approprié à des fins de mise en contact d'accrochage avec ledit premier conducteur dans le but d'établir une connexion galvanique entre ledit élément de court-circuit et ledit premier conducteur, et ledit élément en forme de crochet étant de préférence approprié pour être poussé d'une manière aisément détachable sur la première extrémité d'un bras de prolongement dont l'autre extrémité est munie d'une poignée, caractérisé en ce que le moyen de verrouillage (4, 103) possède un mécanisme en forme de doigt d'encliquetage (21, 22, 132) pour verrouiller ledit moyen de verrouillage (4, 103) audit second conducteur (2, 101), le mécanisme en forme de doigt d'encliquetage étant mobile entre une première position dans laquelle le mécanisme en forme de doigt d'encliquetage n'est pas capable de verrouiller le moyen de verrouillage (4, 103) audit second conducteur et une seconde position dans laquelle le moyen de verrouillage (4, 103) peut être verrouillé audit second conducteur, le mouvement du mécanisme en forme de doigt d'encliquetage entre ladite première et ladite seconde position étant entravé par un mécanisme de verrouillage supplémentaire (28, 131), cet entravement du mécanisme en forme de doigt d'encliquetage pouvant être éliminé en déplaçant un élément de détection (34, 127) entrant en contact avec le second conducteur, le déplacement de l'élément de détection étant obtenu en faisant en sorte que le moyen de verrouillage entre correctement en contact avec ledit second conducteur.

2. Dispositif selon la revendication 1, dans lequel le moyen de verrouillage porte des éléments de retenue pour retenir un élément supplémentaire (5, 7, 8, 104) du dispositif à utiliser à distance dudit moyen de verrouillage sur le dispositif lorsque le moyen de verrouillage se trouve dans la position de déverrouillage et pour libérer ledit assemblage séparé (4) lorsque ledit moyen de verrouillage se trouve dans sa position de verrouillage.

3. Dispositif selon la revendication 1 ou 2, dans lequel le moyen de verrouillage (4-103) peut être replié ou déplié ou est de forme télescopique et est muni d'un élément de verrouillage (13) pour le maintenir dans sa position non pliée ou étendue ou dépliée, position non pliée ou étendue ou dépliée dans laquelle l'élément surplombe l'espace libre ménagé entre deux seconds conducteurs parallèles espacés, et en ce qu'au moins une des extrémités (121) du moyen de verrouillage est construite de telle sorte qu'elle peut être aisément poussée.

4. Dispositif selon la revendication 1, 2 ou 3, dans lequel un moyen de retenue (28, 132) est arrangé pour retenir le moyen de verrouillage (4, 103) dans sa position de libération, ledit élément de retenue étant relié en entraînement au mécanisme de détection (34) ou à l'extrémité (121) du moyen de verrouillage qui peut être poussée par résilience dans le but de pouvoir se déplacer pour quitter ou prendre sa position de retenue.

5. Dispositif selon l'une quelconque des revendications 1 à 4, dans lequel le moyen de verrouillage est logé dans un élément (4) en forme de boîte qui peut être fermé à l'aide d'un élément de recouvrement (10), l'élément de recouvrement maintenant l'élément (4) en forme de boîte fermé à l'aide d'un élément de fermeture (37), ledit élément de fermeture libérant l'élément de recouvrement (10) lorsque l'élément de détection (34) se trouve dans la seconde position, et l'élément en forme de boîte procurant un espace pour que vienne s'y loger au moins un des composants comprenant le pôle (5), l'élément de court-circuit (8) et l'élément (7) en forme de crochet.

6. Dispositif selon la revendication 5, dans lequel l'élément en forme de boîte possède une longueur qui est au moins égale à l'écartement habituel entre les deux rails (2) d'un chemin de fer et en ce que ledit élément en forme de boîte est muni, à proximité de ses extrémités, dans chaque cas, d'un évidement (12, 13) sur son côté tourné vers les rails, un rail (2) pouvant venir se loger dans chacun desdits évidements, tandis que l'élément de verrouillage est arrangé dans au moins un des évidements de telle sorte que, dans la position étendue dudit élément, le mécanisme en forme de doigt d'encliquetage s'étend dans ledit évidement.

7. Dispositif selon l'une quelconque des revendications précédentes, dans lequel l'extrémité (121), qui peut être poussée par résilience, est couplée en entraînement à un élément de guidage (131) qui est mobile dans la direction dans laquelle ladite extrémité est poussée et à l'aide duquel l'élément de retenue (132) est guidé dans le but de se déplacer dans une direction transversale à la direction dans laquelle ladite extrémité est poussée.

8. Dispositif selon l'une quelconque des revendications précédentes, comprenant un assemblage de décharge dans lequel l'assemblage de décharge est muni d'un élément (104) en forme de crochet qui est mobile entre une position active dans le but de venir se disposer par-dessus ledit premier conducteur (102) de façon à agir réciproquement à la manière d'un crochet avec le dernier cité, et une position de libération telle qu'il n'agit pas réciproquement à la manière d'un crochet avec ledit premier conducteur (102), dans lequel ledit élément en forme de crochet est maintenu dans sa position active par un élément (137) qui peut être rompu, à savoir un fil de résistance de préférence fusible qui établit une connexion galvanique entre ledit premier conducteur et ledit assemblage de décharge.

9. Dispositif selon la revendication 8, dans lequel un manchon (7) constitué d'une matière isolante par voie galvanique est arrangé autour de l'élément (47) en forme de crochet et en ce que l'élément en forme de crochet est mobile entre une première position dans laquelle ledit élément est disposé à l'intérieur d'une certaine partie du manchon et une seconde position dans laquelle ledit élément s'étend au-delà du manchon, dans lequel l'élément en forme de crochet est relié en entraînement à un élément de détection (45) qui amène l'élément en forme de crochet de la première à la seconde position, ledit élément de détection pouvant être réalisé pour entrer en contact avec le fil de caténaire (3) et se déplaçant de la première position à l'autre position en poussant le manchon (7) dans la direction dudit fil de caténaire (3).

10. Dispositif selon la revendication 9, dans lequel on prévoit un groupe d'éléments (47) en forme de crochets, lesdits éléments étant respectivement aptes à pivoter autour de broches parallèles (53), dans lequel lesdits éléments (47) en forme de crochets peuvent être déplacés à l'encontre de l'action exercée par un moyen élastique résilient (54) de remise a l'état initial, de la première position à la seconde position, et en ce que l'élément de détection (45) est arrangé entre ledit groupe d'éléments en forme de crochets.
